# FASCICULE DE BREVET EUROPEEN

(11) **EP 1 695 423 B1**
(45) Date de publication et mention de la délivrance du brevet: **17.07.2013**
(21) Numéro de dépôt: 04816372.9
(22) Date de dépôt: 13.12.2004
(51) Int. Cl.: H02G 3/04, H02G 3/06

(54) **ACCESSOIRE POUR LA REHAUSSE ET L' ECLISSAGE DE CHEMINS DE CABLES EN FILS**
HILFSEINRICHTUNG ZUM HEBEN UND BONDEN VON DRAHTKABEL-EINLAGEN
ACCESSORY FOR LIFTING AND BONDING WIRE CABLE TRAYS

(30) Priorité: 19.12.2003 FR 0315042
(43) Date de publication de la demande: 30.08.2006
(73) Titulaire: ICM Group, 21500 Montbard (FR)
(72) Inventeur: DECIRY, James, F-60200 Compiègne (FR); QUERTELET, Stéphane, F-60190 Remy (FR)
(74) Mandataire: Lepelletier-Beaufond, François
(86) Numéro de dépôt international: PCT/FR2004/003198
(87) Numéro de publication internationale: WO 2005/062436

(56) Documents cités:
- DE-A- 2 036 325
- GB-A- 2 301 951

## Description

La présente invention concerne un accessoire pour la rehausse et l'éclissage de chemins de câbles en fils.

Le domaine de l'invention est le montage et l'éclissage de chemins de câbles en fils. On utilise des chemins de câbles pour assurer le soutien, le logement et la protection d'éléments longilignes tels des câbles électriques mais également des tubes, par exemple des tubes de liaison pneumatique ou hydraulique.

Un chemin de câbles en fils présente généralement une forme allongée et une section en U. Il comporte des fils longitudinaux, appelés aussi fils de chaîne, et des fils transversaux, appelés aussi fils de trame. Les fils de chaîne sont généralement rectilignes et les fils de trame présentent une forme en U. Les fils de trame sont soudés aux fils de chaîne et sont régulièrement espacés. Le chemin de câbles ainsi réalisé présente un fond destiné à servir de support aux câbles ou similaires et des parois latérales, ou ailes, destinées à maintenir les câbles sur le fond.

Dans tout ce qui suit, dans un souci de simplification et de clarté, la description sera faite en référence à des câbles électriques. Toutefois l'invention s'applique à tout autre type d'élément longiligne pouvant être supporté par un chemin de câbles en fils : tube de transport de fluide (pneumatique ou hydraulique), fibre optique, etc....

De tels chemins de câbles trouvent leur place partout où l'on souhaite faire passer des câbles électriques. Toutefois, lorsqu'un chemin de câbles est destiné à supporter des câbles électriques au niveau du sol, il est préférable de le rehausser afin de protéger les câbles électriques qu'il transporte, notamment en cas d'inondation.

Pour rehausser un chemin de câbles, il est connu par exemple de disposer des pieds régulièrement répartis sous le chemin de câbles. On dispose ainsi par exemple deux pieds sur un même fil de trame et on réalise cette opération à intervalles réguliers. Il est également connu de faire reposer le chemin de câbles sur un étrier fixé sur le sol. La liaison entre l'étrier et le chemin de câbles se fait par exemple à l'aide de crochets réalisés sur l'étrier et venant en prise avec un fil de chaîne du chemin de câbles.

Pour réaliser l'éclissage de deux chemins de câbles, il est connu d'utiliser par exemple une éclisse pour relier deux chemins de câbles mis bout à bout. On trouve alors face à face deux fils de trame. L'éclisse comporte par exemple des moyens de clipsage permettant de se clipser sur chacun des fils de trame se faisant face, assurant ainsi la liaison des chemins de câbles.

Les dispositifs connus de l'art antérieur ne sont pas prévus pour réaliser à la fois la rehausse et l'éclissage de deux chemins de câbles. En outre, les accessoires de rehausse connus, le plus souvent, ne peuvent pas être montés à l'avance sur le chemin de câbles auquel ils sont destinés. Lorsqu'un tel pré-montage est possible, celui-ci est réalisé à l'aide de boulons ou de soudures. Un tel pré-montage est coûteux en temps. Le document DE-A-2036325 montre une éclisse montée à un boulon.

La présente invention a alors pour but de fournir un accessoire permettant à la fois la rehausse et l'éclissage de chemins de câbles en fils. Cet accessoire sera de préférence également pré-montable sur un tel chemin de câbles.

A cet effet, elle propose un accessoire pour la rehausse et l'éclissage de chemins de câbles en fils comportant des fils de chaîne longitudinaux et des fils de trame transversaux reliant les fils de chaîne, le chemin de câbles en fils présentant un fond destiné à recevoir des câbles électriques ou similaires et deux ailes latérales.

Selon l'invention, cet accessoire comporte une face supérieure rehaussée par au moins deux pattes, la face supérieure comporte d'une part deux premiers logements disposés parallèlement l'un par rapport à l'autre et destinés à recevoir chacun un fil de trame et d'autre part au moins un logement sensiblement perpendiculaire aux deux premiers logements, et au moins un dispositif de verrouillage est prévu de chaque côté d'une ligne médiane entre les deux premiers logements.

De cette manière les pattes du dispositif selon l'invention permettent de réaliser la rehausse d'un chemin de câbles qui vient prendre appui sur la face supérieure de ce dispositif. Les premiers logements de cette face supérieure sont destinés chacun à recevoir un fil de trame. L'accessoire selon l'invention peut ainsi recevoir les deux extrémités mises l'une face à l'autre de deux chemins de câbles en fils pour la réalisation d'un éclissage. L'autre logement peut alors recevoir soit deux fils de chaîne dans le cas de la réalisation d'un éclissage, soit un seul fil de chaîne dans les autres cas. Les moyens de verrouillage permettent alors de solidariser un ou deux (dans le cas de la réalisation d'un éclissage) chemin(s) de câbles avec l'accessoire.

Dans une première forme de réalisation, les deux premiers logements se présentent chacun par exemple sous la forme d'une rainure dont la forme est adaptée à celle d'un fil de trame. Le logement sensiblement perpendiculaire aux premiers logements est quant à lui par exemple réalisé par une découpe dans la face supérieure de l'accessoire.

Les dispositifs de verrouillage sont par exemple destinés au verrouillage d'un fil de chaîne et sont alors avantageusement disposés de part et d'autre des premiers logements destinés aux fils de trame pour faciliter le verrouillage de deux chemins de câbles lors de la réalisation d'un éclissage.

Dans une forme de réalisation préférée, chaque dispositif de verrouillage comporte une languette rabattable associée à un logement, la languette permettant dans sa position non rabattue de placer un fil dans le logement correspondant et dans sa position rabattue de maintenir le fil dans son logement. Cette forme de réalisation permet de facilement et rapidement verrouiller un fil (de chaîne ou de trame) dans son logement et permet également un pré-montage de l'accessoire selon l'invention sur un chemin de câbles. Dans cette forme de réalisation, la languette présente avantageusement une découpe sensiblement rectangulaire permettant l'introduction de l'extrémité d'un tournevis plat pour amener la languette en position verrouillée.

Dans le cas où le logement perpendiculaire aux deux premiers logements est réalisé par découpe de la face supérieure de l'accessoire, la découpe se présente par exemple sous la forme d'une gorge surplombée par deux languettes de verrouillage, un fil de chaîne pouvant venir prendre place entre le fond de la gorge et les languettes de verrouillage. Un fil de chaîne peut alors être introduit dans la gorge puis coulissé sous la languette de verrouillage.

Pour pouvoir également réaliser la rehausse et l'éclissage de chemins de câbles en tôle, la face supérieure comporte avantageusement au moins deux alésages. Ces derniers peuvent alors coopérer avec les ajours existant généralement dans les chemins de câbles en tôle pour venir fixer un tel chemin de câbles sur l'accessoire selon l'invention.

Pour la fixation de l'accessoire sur un sol ou toute autre surface porteuse, on prévoit par exemple que l'une de ses pattes au moins est munie de moyens de fixation. Ces derniers peuvent être un rebord dans lequel sont réalisés deux (ou plus) alésages.

Dans le mode de réalisation préférentiel, l'accessoire selon l'invention se présente sous la forme d'une pièce profilée de section sensiblement en U inversé, les branches du U formant les pattes de l'accessoire et la base du U la face supérieure de celui-ci. Une telle pièce peut être facilement fabriquée et est d'un prix de revient peu élevé.

Dans ce mode de réalisation préférentiel, une branche du U est par exemple repliée à angle droit vers l'extérieur du U à son extrémité opposée à la base formant ainsi un rebord de fixation. On peut également prévoir que la base du U comporte d'une part deux rainures longitudinales dont la concavité est orientée vers l'extérieur du U et d'autre part deux découpes transversales se prolongeant sur une partie de la hauteur des branches du U formant ainsi deux gorges transversales. Ces rainures et gorges forment alors les logements destinés à recevoir des fils de chaîne et de trame de chemins de câbles en fils. Pour réaliser les moyens de verrouillage, les gorges transversales sont par exemple surplombées chacune par deux languettes, et les deux languettes d'une gorge sont disposées de part et d'autre des rainures longitudinales et sont rattachées à un même bord de la gorge. Pour alors permettre un meilleur verrouillage dans la gorge correspondante, la découpe sur les branches du U présente du côté, d'une part du fond de la gorge et d'autre part des languettes, une surface inclinée.

Des détails et avantages de la présente invention ressortiront mieux de la description qui suit, faite en référence au dessin schématique annexé sur lequel :
La figure 1 est une vue en perspective d'un accessoire selon l'invention,
La figure 2 est une vue de dessus de l'accessoire représenté sur la figure 1,
La figure 3 est une vue de face de l'accessoire des figures 1 et 2,
La figure 4 est une vue de côté de l'accessoire présenté sur les figures 1 à 3, et
La figure 5 est une vue en perspective montrant l'accessoire selon l'invention utilisé à la fois comme éclisse et rehausse.

L'accessoire représenté au dessin se présente sous la forme d'une pièce métallique profilée réalisée à partir d'une tôle découpée et pliée. L'épaisseur de la tôle est à titre indicatif de l'ordre du millimètre. Le matériau utilisé est par exemple de l'acier et la tôle est par exemple galvanisée en continu selon le procédé Sendzimir (marque déposée).

Cette pièce profilée présente une forme générale en U inversé formant de la sorte un pontet. Les branches du U réalisent deux pattes 2 et une face supérieure 4. On suppose dans le suite de la description que les pattes 2 sont sensiblement verticales et la face supérieure 4 sensiblement horizontale. Les pattes 2 sont destinées à reposer sur un sol plan sensiblement horizontal et permettent de maintenir la face supérieure 4 à distance de ce sol et parallèlement à celui-ci.

Comme on peut le voir sur les figures, une patte 2 est munie d'un rebord 6. Ce dernier est réalisé à l'extrémité de la patte 2 concernée, à l'opposé de la face supérieure 4. Ce rebord 6 s'étend horizontalement et est destiné à la fixation de l'accessoire sur un sol. A cet effet, des alésages 8 sont réalisés dans le rebord 6. La fixation de l'accessoire sur le sol peut ainsi s'opérer à l'aide d'un pistolet de scellement ou à l'aide de moyens classiques tels des vis et/ou boulons.

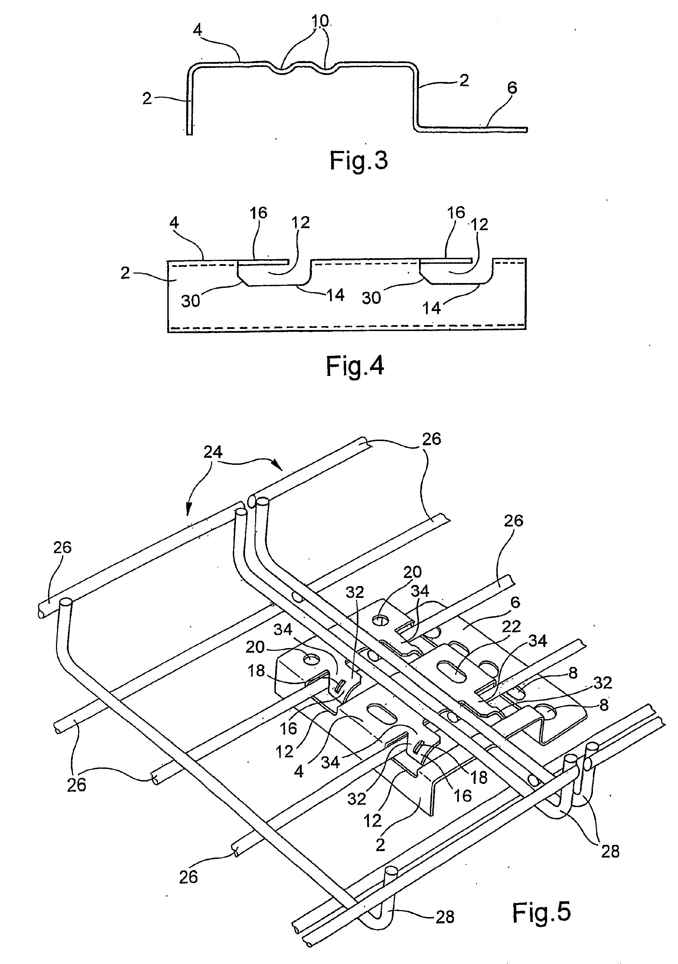

La face supérieure 4 de l'accessoire comporte deux rainures longitudinales 10. Ces rainures 10 présentent une concavité orientée vers l'extérieur du U, c'est-à-dire, compte tenu de l'orientation retenue, vers le haut. Ces rainures longitudinales 10 s'étendent sur toute la longueur de la pièce profilée. Leur forme est complémentaire de la forme d'un fil de trame d'un chemin de câbles pour lequel l'accessoire représenté est destiné. Il sera indiqué plus loin, en référence à la figure 5, la manière dont un chemin de câbles coopère avec l'accessoire selon l'invention décrite ici.

La face supérieure 4 comporte également deux découpes transversales réalisant deux gorges 12. Les deux découpes réalisées sont identiques et chacune s'étend sur toute la largeur de la face supérieure 4 ainsi que sur une partie de la hauteur des pattes 2. On retrouve ainsi, en vue de côté (figure 4), deux encoches 14 en haut de chaque patte 2.

Les gorges 12 sont chacune surplombées par deux languettes 16. Dans sa position initiale, chaque languette 16 s'étend dans un plan horizontal correspondant au plan de la face supérieure 4. Les deux languettes 16 d'une même gorge 12 se trouvent, d'une part, rattachées à un même bord de la gorge 12 et, d'autre part, de part et d'autre des rainures longitudinales 10. Chaque languette 16 présente une découpe rectangulaire 18 destinée à recevoir l'extrémité d'un tournevis plat. L'accessoire décrit ici comporte ainsi deux ensembles identiques, chacun de ces ensembles comportant une gorge 12 et deux languettes 16. Ces ensembles sont disposés parallèlement, toutes les languettes 16 se trouvant d'un même côté.

On remarque également des alésages réalisés dans la face supérieure 4 de l'accessoire. Dans la forme de réalisation représentée au dessin, deux alésages circulaires 20 et deux trous oblongs 22 sont réalisés. Les alésages circulaires 20 se trouvent entre une gorge 12 et un bord transversal de la pièce profilée et sont situés de part et d'autre des rainures longitudinales 10. Les trous oblongs 22 sont quant à eux disposés de part et d'autre des rainures longitudinales 10, entre les deux gorges 12.

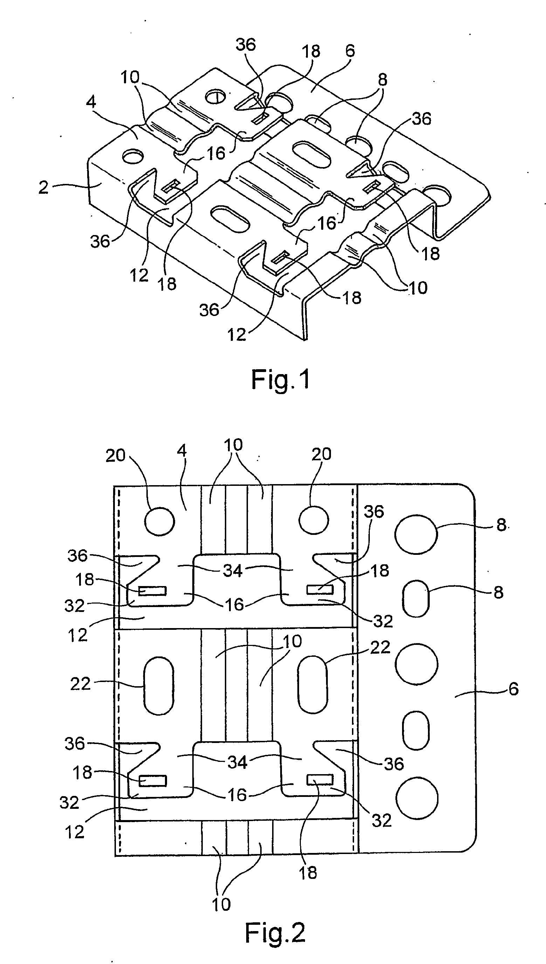

La figure 5 montre comment l'accessoire représenté sur les figures 1 à 4 coopère avec deux chemins de câbles 24 pour réaliser à la fois leur éclissage et leur rehausse.

Chaque chemin de câbles 24 comporte des fils de chaîne 26 longitudinaux et des fils de trame 28 transversaux. On suppose ici que les fils de chaîne sont des fils rectilignes tandis que les fils de trame 28 présentent une forme en U. La structure d'un tel chemin de câbles est connue de l'homme du métier et n'est pas décrite plus en détails ici.

Pour réaliser l'éclissage des deux chemins de câbles 24, ceux-ci sont mis bout à bout. Les chemins de câbles 24 sont généralement réalisés de telle sorte qu'à chacune de leurs extrémités se trouve un fil de trame 28. On retrouve ainsi deux fils de trame 28 face à face au niveau de la jonction des deux chemins de câbles 24.

Chacun des fils de trame 28 disposé en extrémité est alors disposé dans une rainure longitudinale 10. Les gorges 12 sont destinées à recevoir quant à elles chacune un fil de chaîne 26. Comme indiqué plus haut, les gorges 12 sont surplombées par les languettes 16. Ces dernières gênent donc l'accès à la gorge 12. Toutefois un passage est laissé libre entre l'extrémité des languettes 16 et le bord de la gorge opposé au bord sur lequel sont fixées les languettes 16. Cet espace libre est suffisant pour permettre le passage d'un fil de chaîne 26. En outre, la distance séparant les deux gorges 12 correspond à la distance séparant deux fils de chaîne 26 voisins au fond d'un chemin de câbles 24. Le pas entre les deux gorges 12 correspond ainsi au pas des fils de chaîne 26 au fond d'un chemin de câbles 24. Chaque chemin de câbles 24 est placé de telle sorte que deux fils de chaîne 26 de son fond se trouvent au niveau d'un espace libre permettant d'accéder à une gorge 12. Les fils de chaîne 26 "tombent" alors au fond de la gorge 12 correspondante tandis que le fil de trame 28 vient prendre place dans la rainure longitudinale 10. La profondeur de la gorge 12 est supérieure au diamètre du fil de chaîne 26. Ainsi, les encoches 14 réalisées dans les pattes 2 présentent une hauteur supérieure à ce diamètre.

Une fois le chemin de câbles 24 ainsi positionné par rapport à l'accessoire, un déplacement relatif entre l'accessoire selon l'invention et le chemin de câbles est réalisé. Ce déplacement s'effectue dans la direction donnée par les rainures longitudinales 10. Le fil de trame 28 coulisse ainsi dans la rainure longitudinale 10 correspondante. Durant ce déplacement, les fils de chaîne 26 se trouvant dans les gorges 12 se déplacent pour prendre place sous les languettes 16. Ce déplacement se poursuit jusqu'à ce que les fils de chaîne 26 arrivent en butée du côté du bord de la gorge portant les languettes 16. On remarque sur la figure 4 que le fond des encoches 14 présente de ce côté une surface inclinée 30 de manière à guider le fil de chaîne 26 venant en butée vers le haut afin de venir en appui sous la languette 16. Cette surface inclinée 30 permet également d'accepter des fils de chaîne 26 de différents diamètres.

Il suffit alors de rabattre les languettes 16 vers le fond de la gorge 12 pour venir bloquer le fil de chaîne 26 correspondant. La languette 16 est pliée par exemple en introduisant une extrémité d'un tournevis plat dans la découpe rectangulaire 18 prévue à cet effet dans chaque languette 16.

Chaque languette 16 présente une zone 32 destinée au verrouillage d'un fil de chaîne 26 dans la gorge 12 correspondante ainsi qu'un pontet de liaison 34 permettant de relier la zone 32 de verrouillage au bord de la gorge 12, c'est-à-dire aussi à la face supérieure 4. Le pontet de liaison 34 est réalisé de telle sorte qu'il subsiste entre la zone 32 de verrouillage de la languette 16 et le bord correspondant de la gorge 12 un espace triangulaire 36 libre. La découpe rectangulaire 18 est disposée dans la zone 32 de verrouillage de manière à se trouver du côté de l'espace triangulaire 36. Ce dernier permet, lorsque la languette 16 est rabattue, de venir pousser le fil de chaîne 26 correspondant au fond de la gorge 12 et sous le pontet de liaison 34.

On réalise ainsi une parfaite solidarisation de l'accessoire selon l'invention avec chacun des chemins de câbles 24. Une première zone d'appui d'un chemin de câbles 24 sur l'accessoire décrit est réalisée entre la rainure longitudinale 10 et le fil de trame 28 correspondant. Comme indiqué plus haut, la forme de la rainure longitudinale 10 est adaptée à celle du fil de trame : cette rainure longitudinale 10 présente donc la forme d'une partie d'un cylindre dont le diamètre intérieur correspond sensiblement au diamètre extérieur d'un fil de trame 28.

Au niveau d'un fil de chaîne 26, deux zones d'appui sont réalisées. Tout d'abord le fil de chaîne vient en butée au fond de la gorge 12 sur la surface inclinée 30 de l'encoche 14 correspondante (ou éventuellement sur un bord sensiblement vertical de cette encoche). Ensuite, comme décrit plus haut, le fil de chaîne vient en appui sous la languette 16, au niveau du pontet de liaison 34.

Dans la description faite en référence à la figure 5, l'accessoire des figures 1 et 4 est utilisé pour réaliser à la fois l'éclissage de deux chemins de câbles et la rehausse de ceux-ci. Cet accessoire peut également être utilisé uniquement pour la rehausse d'un chemin de câbles. Dans ce cas, un fil de trame 28 de ce chemin de câbles 24 vient prendre place dans l'une des deux rainures longitudinales 10 de l'accessoire et deux fils de chaîne 26 viennent prendre place dans les deux gorges 12 de l'accessoire. Après avoir fait glisser les fils de chaîne 26 sous les languettes 16, ces dernières sont rabattues et la rehausse est ainsi fixée sur le chemin de câbles 24.

Un pré-montage de l'accessoire peut être réalisé sur un chemin de câbles 24. Selon la longueur de ce dernier, on peut par exemple prévoir de monter un accessoire vers le milieu du chemin de câbles et un autre à l'une de ses extrémités. L'accessoire disposé en extrémité est alors prêt à recevoir un deuxième chemin de câbles qu'il suffit de positionner, de faire coulisser transversalement pour arriver en butée au fond de la gorge et de verrouiller en rabattant deux languettes 16.

L'accessoire décrit ci-dessus permet également de garantir une bonne continuité électrique entre deux chemins de câbles successifs et une bonne mise à la terre de ces chemins de câbles. En effet, comme indiqué plus haut, trois zones d'appui sont réalisées et celles-ci garantissent une excellente continuité électrique.

L'accessoire a été décrit ci-dessus en référence à une fixation sur un sol (horizontal). Il peut également être utilisé dans certaines circonstances pour fixer un chemin de câbles à un mur (vertical), le chemin de câbles étant alors placé horizontalement ou verticalement.

L'accessoire décrit est particulièrement bien adapté pour la rehausse et l'éclissage de chemins de câbles en fils. Toutefois, grâce aux alésages circulaires 20 et aux trous oblongs 22 cet accessoire peut également être utilisé avec des chemins de câbles en tôle. De tels chemins de câbles sont généralement ajourés et une fixation de tels chemins de câbles sur un accessoire tel que décrit ci-dessus peut être envisagée à l'aide de vis et/ou boulons.

Comme il ressort de tout ce qui précède, l'accessoire décrit ci-dessus peut être qualifié d'universel. En effet, il permet de réaliser l'éclissage de deux chemins de câbles en fils éventuellement de différents diamètres (ou en tôle), la rehausse de tels chemins de câbles, la continuité électrique entre deux chemins de câbles, la mise à la terre d'un chemin de câbles. En outre, il présente l'avantage de pouvoir être pré-monté sans vis, boulons, ou autres moyens de liaison sur un chemin de câbles en rabattant simplement deux (ou quatre) languettes. En outre, il est très peu agressif vis-à-vis des câbles susceptibles d'être tirés dans le chemin de câbles. Il est en plus économique à réaliser puisqu'il peut être obtenu en multiples exemplaires à partir d'une tôle découpée et pliée à la presse.

La présente invention ne se limite pas à la forme de réalisation préférentielle décrite ci-dessus à titre d'exemple non limitatif. Elle concerne toutes les variantes de réalisation à la portée de l'homme du métier dans le cadre des revendications ci-après.

Ainsi par exemple, alors que l'accessoire décrit est prévu pour coopérer avec deux fils de chaîne d'un chemin de câbles en fils, il pourrait ne comporter qu'une seule gorge et ne recevoir ainsi qu'un seul fil de chaîne. Un tel accessoire pourrait être utilisé pour des chemins de câbles de faibles dimensions. A l'inverse, pour des chemins de câbles de grandes dimensions, un accessoire avec trois gorges (ou plus) est également envisageable.

L'accessoire décrit comporte des gorges destinées à recevoir chacune un fil de chaîne et des rainures destinées chacune à recevoir un fil de trame. On pourrait envisager de recevoir un fil de trame dans une gorge et un fil de chaîne dans une rainure.

Les moyens de verrouillage décrits réalisent le verrouillage d'un fil de chaîne. On pourrait également envisager un verrouillage au niveau d'un fil de trame. En ce qui concerne ces moyens de verrouillage, d'autres moyens sont par exemple envisageables. On pourrait par exemple prévoir de venir clipser une pince sur un fil de trame ou de chaîne.

## Revendications

1. Accessoire pour la rehausse et l'éclissage de chemins de câbles (24) en fils comportant des fils de chaîne (26) longitudinaux et des fils de trame (28) transversaux reliant les fils de chaîne (26), le chemin de câbles (24) en fils présentant un fond destiné à recevoir des câbles électriques ou similaires et deux ailes latérales,
**caractérisé en ce qu'**il comporte une face supérieure (4) rehaussée par au moins deux pattes (2), **en ce que** la face supérieure (4) comporte d'une part deux premiers logements (10) disposés parallèlement l'un par rapport à l'autre et destinés à recevoir chacun un fil de trame (28) et d'autre part au moins un logement (12) sensiblement perpendiculaire aux deux premiers logements (10), et **en ce qu'**au moins un dispositif de verrouillage (16) est prévu de chaque côté d'une ligne médiane entre les deux premiers logements (10).

2. Accessoire selon la revendication 1, **caractérisé en ce que** les deux premiers logements se présentent chacun sous la forme d'une rainure (10) dont la forme est adaptée à celle d'un fil de trame (28).

3. Accessoire selon l'une des revendications 1 ou 2, **caractérisé en ce que** le logement (12) sensiblement perpendiculaire aux premiers logements (10) est réalisé par une découpe dans la face supérieure (4) de l'accessoire.

4. Accessoire selon l'une des revendications 1 à 3, **caractérisé en ce que** les dispositifs de verrouillage (16) sont destinés au verrouillage d'un fil de chaîne (26) et sont disposés de part et d'autre des premiers logements (10) destinés aux fils de trame (28).

5. Accessoire selon l'une des revendications 1 à 4, **caractérisé en ce que** chaque dispositif de verrouillage comporte une languette (16) rabattable associée à un logement (12), la languette (16) permettant dans sa position non rabattue de placer un fil (26) dans le logement (12) correspondant et dans sa position rabattue de maintenir le fil (26) dans son logement (12).

6. Accessoire selon la revendication 5, **caractérisé en ce que** la languette (16) présente une découpe (18) sensiblement rectangulaire permettant l'introduction de l'extrémité d'un tournevis plat.

7. Accessoire selon les revendications 3 et 5, **caractérisé en ce que** la découpe se présente sous la forme d'une gorge (12) surplombée par deux languettes (16) de verrouillage, un fil de chaîne (26) pouvant venir prendre place entre le fond de la gorge (12) et les languettes (16) de verrouillage.

8. Accessoire selon l'une des revendications 1 à 7, **caractérisé en ce que** la face supérieure (4) comporte au moins deux alésages (20, 22).

9. Accessoire selon l'une des revendications 1 à 8, **caractérisé en ce qu'**une de ses pattes (2) au moins est munie de moyens de fixation (6, 8).

10. Accessoire selon l'une des revendications 1 à 9, **caractérisé en ce qu'**il se présente sous la forme d'une pièce profilée de section sensiblement en U inversé, les branches du U formant les pattes (2) de l'accessoire et la base du U la face supérieure (4) de celui-ci.

11. Accessoire selon la revendication 10, **caractérisé en ce qu'**une branche du U est repliée à angle droit vers l'extérieur du U à son extrémité opposée à la base formant ainsi un rebord (6) de fixation.

12. Accessoire selon l'une des revendications 10 ou 11, **caractérisé en ce que** la base du U comporte d'une part deux rainures longitudinales (10) dont la concavité est orientée vers l'extérieur du U et d'autre part deux découpes transversales se prolongeant sur une partie de la hauteur des branches du U formant ainsi deux gorges (12) transversales.

13. Accessoire selon la revendication 12, **caractérisé en ce que** les gorges (12) transversales sont surplombées chacune par deux languettes (16), et **en ce que** les deux languettes (16) d'une gorge sont disposées de part et d'autre des rainures longitudinales (10) et sont rattachées à un même bord de la gorge (12).

14. Accessoire selon la revendication 13, **caractérisé en ce que** la découpe sur les branches du U présente du côté, d'une part du fond de la gorge (12) et d'autre part des languettes (16), une surface inclinée (30).

## Patentansprüche

1. Hilfseinrichtung zum Anheben und Verlaschen von Gitterkabelschächten (24), die längsverlaufende Kettdrähte (26) und quer verlaufende, die Kettdrähte verbindende Schussdrähte (28) umfassen, wobei der Gitterkabelschacht (24) einen Boden zur Aufnahme von elektrischen Kabeln oder Ähnlichem und zwei Seitenschenkel aufweist,
**dadurch gekennzeichnet, dass** sie eine durch wenigstens zwei Füße (2) angehobene Oberseite (4) aufweist, dass die Oberseite (4) einerseits zwei zueinander parallel angeordnete erste Aufnahmen (10) zur Aufnahme von jeweils einem Schussdraht (28) und andererseits wenigstens eine zu den beiden ersten Aufnahmen (10) im Wesentlichen rechtwinklige Aufnahme (12) aufweist, und dass wenigstens eine Verriegelungseinrichtung (16) auf jeder Seite einer zwischen den beiden ersten Aufnahmen (10) verlaufenden Mittelachse vorgesehen ist.

2. Hilfseinrichtung nach Anspruch 1,
**dadurch gekennzeichnet, dass** die beiden ersten Aufnahmen jeweils die Form einer Einkerbung (10) haben, deren Form an die eines Schussdrahts (28) angepasst ist.

3. Hilfseinrichtung nach einem der Ansprüche 1 oder 2,
**dadurch gekennzeichnet, dass** die zu den ersten Aufnahmen (10) im Wesentlichen rechtwinklige Aufnahme (12) durch einen Ausschnitt in der Oberseite (4) der Hilfseinrichtung realisiert ist.

4. Hilfseinrichtung nach einem der Ansprüche 1 bis 3,
**dadurch gekennzeichnet, dass** die Verriegelungseinrichtungen (16) zum Blockieren eines Kettdrahts (26) bestimmt und beiderseits der für die Schussdrähte (28) bestimmten ersten Aufnahmen (10) angeordnet sind.

5. Hilfseinrichtung nach einem der Ansprüche 1 bis 4,
**dadurch gekennzeichnet, dass** jede Verriegelungseinrichtung eine einer Aufnahme (12) zugeordnete, umklappbare Lasche (16) aufweist, wobei die Lasche (16) in ihrer nicht umgeklappten Stellung das Platzieren eines Drahts (26) in der entsprechenden Aufnahme (12) und in ihrer umgeklappten Stellung das Halten des Drahts (26) in seiner Aufnahme (12) erlaubt.

6. Hilfseinrichtung nach Anspruch 5,
**dadurch gekennzeichnet, dass** die Lasche (16) einen im Wesentlichen rechteckigen Ausschnitt (18) aufweist, der das Einführen des Endes eines flachen Schraubendrehers ermöglicht.

7. Hilfseinrichtung nach den Ansprüchen 3 und 5,
**dadurch gekennzeichnet, dass** der Ausschnitt die Form einer Nut (12) hat, die von zwei Verriegelungslaschen (16) überspannt wird, wobei ein Kettdraht (26) zwischen dem Boden der Nut (12) und den Verriegelungslaschen (16) platziert werden kann.

8. Hilfseinrichtung nach einem der Ansprüche 1 bis 7,
**dadurch gekennzeichnet, dass** die Oberseite (4) wenigstens zwei Bohrungen (20, 22) aufweist.

9. Hilfseinrichtung nach einem der Ansprüche 1 bis 8,
**dadurch gekennzeichnet, dass** wenigstens einer ihrer Füße (2) mit Befestigungsmitteln (6, 8) versehen ist.

10. Hilfseinrichtung nach einem der Ansprüche 1 bis 9,
**dadurch gekennzeichnet, dass** sie die Form eines Profilstücks mit einem Querschnitt in Form eines im Wesentlichen auf dem Kopf stehenden U hat, wobei die Schenkel des U die Füße (2) der Hilfseinrichtung und die Basis des U die Hilfseinrichtungsoberseite (4) bilden.

11. Hilfseinrichtung nach Anspruch 10,
**dadurch gekennzeichnet, dass** ein U-Schenkel an seinem der Basis entgegengesetzten Ende rechtwinklig nach außen umgebogen ist und dadurch einen Befestigungsrand (6) bildet.

12. Hilfseinrichtung nach einem der Ansprüche 10 oder 11,
**dadurch gekennzeichnet, dass** die U-Basis einerseits zwei Längseinkerbungen (10) aufweist, deren Konkavität zur Außenseite des U gewandt ist, und andererseits zwei quer verlaufende Ausschnitte, die sich über einen Teil der Höhe der U-Schenkel fortsetzen und dadurch zwei Quernuten (12) bilden.

13. Hilfseinrichtung nach Anspruch 12,
**dadurch gekennzeichnet, dass** die Quernuten (12) jeweils von zwei Laschen (16) überspannt werden, und dass die beiden Laschen (16) einer Nut auf beiden Seiten der Längseinkerbungen (10) angeordnet und mit ein und demselben Rand der Nut (12) verbunden sind.

14. Hilfseinrichtung nach Anspruch 13,
**dadurch gekennzeichnet, dass** der Ausschnitt an den U-Schenkeln in der Nähe einerseits des Bodens der Nut (12) und andererseits der Laschen (16) eine schräge Fläche (30) aufweist.

## Claims

1. An accessory for raising and splicing together wire cable trays (24) comprising longitudinal warp wires (26) and transverse weft wires (28) linking the warp wires (26), the wire cable tray (24) having a bottom adapted to receive electric cables or the like and two side flanges,
**characterized in that** it comprises an upper face (4) raised by at least two feet (2), **in that** the upper face (4) comprises two first housings (10) disposed parallel to each other and each adapted to receive a weft wire (28) and at least one housing (12) substantially perpendicular to the first two housings (10), and **in that** at least one locking device (16) is provided on each side of a median line between the first two housings (10).

2. An accessory according to claim 1, **characterized in that** the first two housings each have the form of a groove (10) of which the form is adapted to that of a weft wire (28).

3. An accessory according to one of claims 1 or 2, **characterized in that** the housing (12) substantially perpendicular to the first housings (10) is formed by a cut-out in the upper face (4) of the accessory.

4. An accessory according to one of claims 1 to 3, **characterized in that** the locking devices (16) are intended to lock a warp wire (26) and are disposed on respective opposite sides of the first housings (10) intended for the weft wires (28).

5. An accessory according to one of claims 1 to 4, **characterized in that** each locking device comprises a tab (16) that can be folded down associated with a housing (12), the tab (16) enabling a wire (26) to be placed into the corresponding housing (12) in its non-folded down position and enabling the wire (26) to be held in its housing (12) in its folded down position.

6. An accessory according to claim 5, **characterized in that** the tab (16) has a substantially rectangular cut-out (18) enabling the end of a flat-bladed screwdriver to be inserted.

7. An accessory according to claims 3 and 5, **characterized in that** the cut-out has the form of a channel (12) overhung by two locking tabs (16), a warp wire (26) being able to locate between the bottom of the channel (12) and the locking tabs (16).

8. An accessory according to one of claims 1 to 7, **characterized in that** the upper face (4) comprises at least two bores (20, 22).

9. An accessory according to one of claims 1 to 8, **characterized in that** at least one of its feet (2) is provided with fixing means (6, 8).

10. An accessory according to one of claims 1 to 9, **characterized in that** it takes the form of a profiled part having substantially in section an inverted U-shape, the branches of the U forming the legs (2) of the accessory, and the base of the U the upper face (4) thereof.

11. An accessory according to claim 10, **characterized in that** a branch of the U is folded at a right angle outwardly of the U at its opposite end from the base so forming a fixing rim (6).

12. An accessory according to one of claims 10 or 11, **characterized in that** the base of the U comprises two longitudinal grooves (10) of which the concave form is directed outwardly of the U and two transverse cut-outs which continue over a portion of the height of the branches of the U so forming two transverse channels (12).

13. An accessory according to claim 12, **characterized in that** the transverse channels (12) are each overhung by two tabs (16), and **in that** the two tabs (16) of a channel are disposed on respective opposite sides of the longitudinal grooves (10) and are attached to the same edge of the channel (12).

14. An accessory according to claim 13, **characterized in that** the cut-out in the branches of the U has an inclined surface (30) on the side of the bottom of the channel (12) and the tabs (16).
